# EUROPÄISCHE PATENTSCHRIFT

(11) **EP 2 414 113 B1**
(45) Veröffentlichungstag und Bekanntmachung des Hinweises auf die Patenterteilung: **03.05.2017**
(21) Anmeldenummer: 10708719.9
(22) Anmeldetag: 08.03.2010
(51) Int. Cl.: B08B 17/02, C25D 11/04, C25D 11/36, C25D 11/38, C23C 18/12, G02B 5/08

(54) **REFLEKTOR**
REFLECTOR
REFLECTEUR

(30) Priorität: 01.04.2009 CH 531092009
(43) Veröffentlichungstag der Anmeldung: 08.02.2012
(73) Patentinhaber: Constellium Switzerland AG, 8048 Zürich (CH)
(72) Erfinder: GILLICH, Volkmar, CH-8212 Neuhausen (CH); GAZANION, Elodie, CH-8212 Neuhausen (CH); AFSETH, Andreas, F-38000 Grenoble (FR)
(74) Vertreter: Constellium - Propriété Industrielle
(86) Internationale Anmeldenummer: PCT/EP2010/001424
(87) Internationale Veröffentlichungsnummer: WO 2010/112122

(56) Entgegenhaltungen:
- EP-A1- 0 903 389
- EP-A1- 0 918 236
- US-A- 6 013 372
- US-A- 6 071 606
- US-B1- 6 465 088
- XINTONG ZHANG ET AL: "Superhydrophobic TiO2 Surfaces: Preparation, Photocatalytic Wettability Conversion, and Superhydrophobic-Superhydrophilic Patterning" JOURNAL OF PHYSICAL CHEMISTRY, AMERICAN CHEMICAL SOCIETY, US LNKD- DOI:10.1021/JP0744432, Bd. 111, Nr. 39, 12. September 2007 (2007-09-12), Seiten 14521-14529, XP007913347 ISSN: 0022-3654

## Beschreibung

Die Erfindung betrifft einen witterungs- und korrosionsbeständigen Reflektor für elektromagnetische Strahlung, insbesondere für Infrarot-Strahlung, sichtbares Licht und Ultraviolett-Strahlung, mit hoher Gesamtreflexion, enthaltend einen Reflektorkörper aus Aluminium oder einer Aluminiumlegierung mit einer reflektierenden Oberfläche oder enthaltend einen Reflektorkörper mit einer eine reflektierende Oberfläche ausbildenden Reflexionsschicht aus Aluminium oder einer Aluminiumlegierung, wobei der Reflektor eine aussen liegende, abschliessende, transparente Schutzschicht aus einem ein Netzwerk aus Polyoxysilanen aufweisenden Sol-Gel-Lack enthält. Im Rahmen der Erfindung liegt auch ein Verfahren zur Herstellung eines erfindungsgemässen Reflektors.

Es ist allgemein bekannt, Bänder in Glänzwerkstoffen, z.B. Reinaluminium, Reinstaluminium oder AlMg-Legierungen auf Basis von Aluminium mit einem Reinheitsgrad von 99,5% und grösser, wie z.B. 99,8%, die je nach Anwendung diffuse oder gerichtete Lichtreflexion erzeugen, herzustellen und diese mit einem sogenannten Sol-Gel-Lack zu beschichten. Geeignete Sol-Gel-Lacke bilden eine transparente Schutzschicht, welche die darunter liegende reflektierende Oberfläche vor mechanischen oder chemischen Einflüssen schützt und dadurch eine lange Lebensdauer des Reflektors bei hoch bleibenden Reflexionswerten gewährleistet. Besonders geeignete Sol-Gel-Lacke sind überdies witterungsbeständig und eignen sich daher gut für Aussenwendungen. Die transparente Schutzschicht ist insbesondere eine klare, farblose, durchsichtige Schutzschicht.

Die WO 2001/86327 beschreibt einen solchen witterungs- und korrosionsbeständigen Reflektor aus einem Reflektorkörper aus Aluminium oder einer Aluminiumlegierung mit einer reflektierenden Oberfläche, wobei der Reflektor eine aussen liegende, abschliessende transparente Schutzschicht aus einem Sol-Gel-Lack mit einer Dicke von mehr als 1 µm aufweist. Der Sol-Gel-Lack besteht aus einem Polyoxysilan, welches aus einer alkoholischen Silan-Lösung und einer wässrigen kolloidalen Kieselsäure-Lösung hergestellt wird.
Die EP-A-1 791 001 offenbart einen Reflektor mit einer aussen liegenden, abschliessenden transparenten Schutzschicht aus einem Sol-Gel-Lack aus einem Polyoxysilan, wobei das Polyoxysilan mittels säurekatalysierter Hydrolyse und Kondensation eines Gemischs aus einer Lösung A und einer wässrigen Lösung B hergestellt ist, wobei die Lösung A eine Lösung mit einem ersten und zweiten Alkoxysilan und einem mit der Lösung A mischbaren Lösungsmittel ist, und das erste Alkoxysilan ein Tetraethoxysilan (TEOS) und das zweite Alkoxysilan durch die Formel XₙSi(OC₂H₅)₄₋ₙ beschrieben wird, wobei X einen organischen Rest beschreibt und n eine Zahl von 0 bis 3 ist. Das Lacksystem zeichnet sich dadurch aus, dass es einerseits möglichst keine gesundheitsschädlichen Komponenten enthält bzw. bei seiner Verarbeitung freisetzt und andererseits bei jedem Verarbeitungsschritt einen Flammpunkt von >21° C aufweist.

US 6 013 372 offenbart ein Verfahren zur Herstellung eines Reflektors, in dem ein Reflektorkörper aus Aluminium dessen Oberfläche mit einer Schutzschicht versehen wird, welche Anatas TiO2 Partikel enthält, wodurch die Oberfläche hydrophile Eigenschaften erhält.

Solarreflektoren sind der Witterung und damit normalerweise einer Staub- und Schmutzpartikel beladenen Atmosphäre ausgesetzt. Zur Erhaltung eines hohen Reflektionsvermögens ist es erforderlich, die Reflektoren zu unterhalten und von Zeit zu Zeit zu reinigen. Wünschenswert wäre eine einfache Reinigungsmöglichkeit, mit der die Unterhaltsintervalle für Reflektoren verlängert werden können.
Der Erfindung liegt die Aufgabe zugrunde, die Schutzschicht eines Reflektor der eingangs genannten Art auf einfache und kostengünstige Weise mit selbstreinigenden Eigenschaften auszustatten.
Zur erfindungsgemässen Lösung der Aufgabe führt, dass die Oberfläche der Schutzschicht zur Erzeugung eines Selbstreinigungseffekts zumindest teilweise mit freien TiO₂ -Partikeln belegt ist.

Die photokatalytischen Eigenschaften von TiO₂ in der Anatas-Modifikation führen unter UV-Bestrahlung zu einem Abbau verschiedener organischer Substanzen und verhindern damit das Wachstum von Bakterien und Keimen, Schmutzretention und schlechte Gerüche. Die photokatalytischen Eigenschaften von TiO₂ verleihen der Schutzschichtoberfläche hydrophile Eigenschaften, so dass sich Wasser als dünne Schicht zwischen Oberfläche und Schmutzteilchen ausbreitet und Schmutzteilchen dadurch weggewaschen werden.

Bei einer ersten bevorzugten Ausführungsform eines Reflektors mit einer Schutzschicht enthält der Sol-Gel-Lack SiO₂ -Partikel, und wenigstens ein Teil der SiO₂ -Partikel ist durch TiO₂ -Partikel ersetzt.

Bei einer zweiten bevorzugten Ausführungsform eines Reflektors umfasst die Schutzschicht eine erste Teilschicht aus einem Sol-Gel-Lack mit SiO₂ -Partikeln als Korrosionsschutzschicht und eine auf der ersten Teilschicht angeordnete zweite Teilschicht aus einem Sol-Gel-Lack mit TiO₂ -Partikeln als Selbstreinigungsschicht.

Die Schutzschicht weist im gehärteten Zustand eine Dicke von wenigstens 1 µm, vorzugsweise wenigstens 2 µm, und von höchstens 20 µm, vorzugsweise höchstens 10 µm, insbesondere höchstens 5 µm, auf.

Die reflektierende Oberfläche aus Aluminium oder einer Aluminiumlegierung weist bevorzugt eine Rauhigkeit Ra von kleiner als 0,1 µm nach DIN 4761 bis 4768 auf. Der Reflektor weist ferner gemäss 2000h QUV-Test nach ASTM G 53-96 Einbussen in der Gesamtreflexion und im Glanz von weniger als 5 % auf. Die reflektierende Oberfläche kann durch eine auf den Reflektorkörper aufgetragene metallische Reflexionsschicht oder bevorzugt durch die Reflektorkörperoberfläche selbst ausgebildet sein.

Der Reflektorkörper besteht aus oder weist wenigstens eine freie Oberfläche, insbesondere eine Beschichtung, aus einem Metall, insbesondere aus Aluminium oder einer Aluminiumlegierung, wie z.B. Aluminium mit einer Reinheit von 98,3% und höher, auf. Der Reflektorkörper besteht aus oder weist wenigstens eine freie Oberfläche, insbesondere eine Beschichtung, vorteilhaft aus Aluminium mit einer Reinheit von 99,0% und höher, fallweise auch mit einer Reinheit von 99,5% und höher, vorzugsweise jedoch mit einer Reinheit von 99,7% und höher, und insbesondere von 99,8% und höher, auf. Neben Aluminium genannter Reinheiten können bevorzugt auch Aluminiumlegierungen eingesetzt werden. Bevorzugte Legierungen sind diejenigen der Klassen AA 1000, AA 3000 und AA 5000. Weitere anwendbare Legierungen enthalten beispielsweise 0,25 bis 5 Gew.-%, insbesondere 0,5 bis 4 Gew.-%, Magnesium oder enthalten 0,2 bis 2 Gew.-% Mangan oder enthalten 0,5 bis 5 Gew.-% Magnesium und 0,2 bis 2 Gew.-% Mangan, insbesondere 1 Gew.-% Magnesium und 0,5 Gew.-% Mangan oder enthalten 0,1 bis 12 Gew.-%, vorzugsweise 0,1 bis 5 Gew.-%, Kupfer oder enthalten 0,5 bis 6 Gew.-% Zink und 0,5 bis 5 Gew.-% Magnesium oder enthalten 0,5 bis 6 Gew.-% Zink, 0,5 bis 5 Gew.-% Magnesium und 0,5 bis 5 Gew.-% Kupfer oder enthalten 0,5 bis 2 Gew.-% Eisen und 0,2 bis 2 Gew.-% Mangan, insbesondere 1,5 Gew.-% Eisen und 0,4 Gew.-% Mangan oder AlMgSi-Legierungen oder AlFeSi-Legierungen. Weitere Beispiele sind AlMgCu-Legierungen, wie Al99,85Mg0,8Cu oder AlMg-Legierungen, wie AlMg1, oder AlFeMn-Legierungen wie AlFeMn1,5.

Der Reflektorkörper ist bevorzugt ein Walzprodukt und insbesondere ein gewalztes Blech, oder Band, eine gewalzte Folie oder Platte aus walzbarem Aluminium oder einer walzbaren Aluminiumlegierung. Der Reflektorkörper als Walzprodukt kann gegebenenfalls z.B. durch Biegen, Tiefziehen, Kaltfliesspressen und dgl. umgeformt sein.

Ferner können als Reflektorkörper alle räumlichen Gebilde, die wenigstens eine freie Oberfläche aus einem vorgenannten Aluminium oder einer der vorgenannten Aluminiumlegierungen enthalten oder die vollständig daraus bestehen, zur Anwendung gelangen. Es können auch nur Teilbereiche oder begrenzte Oberflächenbereiche des Reflektorkörpers aus den vorgenannten Aluminiumwerkstoffen oder Aluminiumlegierungen bestehen. Weiters können die genannten räumlichen Gebilde Profile oder Balken sein.

Ferner können die Reflektorkörper auch Guss- oder Schmiedeteile aus Aluminium oder einer Aluminiumlegierung sein.

Je nach Einsatzzweck kann der ganze Reflektorkörper aus Aluminium oder einer Aluminiumlegierung sein, es können aber auch nur Teilbereiche oder Oberflächenbereiche daraus bestehen. Das Material aus Aluminium oder der Aluminiumlegierung, z.B. in der Ausführung eines Bleches, einer Folie oder Platte oder einer Beschichtung, kann auch Teil oder Teiloberfläche eines Verbundes darstellen, z.B. eines Folienverbundes oder Laminates beliebiger Werkstoffe, wie z.B. aus Kunststoffen und Aluminium, wie Al-beschichteter Kunststoff, oder Al-beschichtetes Eisen- oder Stahlblech.

Die Reflektorkörperoberfläche, d.h. die Aluminiumoberfläche des Reflektorkörpers, kann beispielsweise durch chemische und/oder mechanische Veränderung, wie z.B. Walzen, Schmieden, Kaltfliesspressen, Pressen oder Giessen erzeugt werden. Die reflexionswirksame Oberfläche des Reflektorkörpers kann zusätzlich einer Nachbehandlung durch Schleifen, Polieren, Strahlen mit Hartstoffen usw. unterzogen werden. Bevorzugt sind Reflektorkörper mit Walzoberflächen, die mit glatten oder strukturierten Walzen erzeugt werden.

Bevorzugt als Reflektorkörper sind Bleche und Bänder, insbesondere gewalzte Bleche und Bänder aus Aluminium oder einer Aluminiumlegierung der vorgenannten Beschaffenheit sowie Aluminium-beschichtetes Eisen- oder Stahlblech mit einer Dicke von beispielsweise 0,1 bis 10 mm, vorzugsweise 1 bis 4 mm, insbesondere 0,2 bis 1,5 mm und besonders bevorzugt 0,3 - 1 mm, wobei die Aluminium-Beschichtung ebenfalls ein Aluminium oder eine Aluminiumlegierung der vorgenannten Beschaffenheit ist. Ein Beispiel ist ein Aluminiumblech Al 99,5 (Reinheit 99,5%) der Dicke von 0,5 mm.

Die Oberfläche des Reflektorkörpers, bzw. die reflektierende Oberfläche, kann vorbehandelt sein und beispielsweise eine Vorbehandlungsschicht aufweisen. Die Vorbehandlungsschicht kann beispielsweise eine anodische Oxidation erzeugte Schicht sein. Vorzugsweise ist die Vorbehandlungsschicht aus anodisch oxidiertem Aluminium und wird insbesondere direkt aus dem an der Oberfläche des Reflektorkörpers liegenden Aluminium erzeugt.
Die Vorbehandlungsschicht kann eine Dicke von beispielsweise wenigstens 10 nm, vorzugsweise von wenigstens 20 nm, insbesondere von wenigstens 50 nm und vorteilhaft von wenigstens 100 nm aufweisen. Die maximale Dicke der Vorbehandlungsschicht beträgt beispielsweise 5000 nm, vorzugsweise 1500 nm und insbesondere 300 nm.
Die Vorbehandlungsschicht ist bevorzugt eine anodisch erzeugte Oxidschicht, die in einem nicht rücklösenden und vorzugsweise in einem rücklösenden Elektrolyten aufgebaut wurde. Die Vorbehandlungsschicht ist vorzugsweise eine poröse, anodisch erzeugte Oxidschicht.
Die Anodisation findet vorzugsweise in einem sauren Elektrolyten aus der Reihe der Phosphorsäure-, Zitronensäure-, Weinsäure-, Chromsäureelektrolyte und insbesondere aus der Reihe der Schwefelsäureelektrolyte statt. Die Anodisation erfolgt im Wechsel- und vorzugsweise im Gleichstromverfahren. Es ist Stückanodisieren, wie auch Bandanodisieren möglich.
Die anodische erzeugte Oxidschicht kann ferner einer Sealing- resp. Verdichtungsbehandlung unterzogen werden. Die genannte Oxidschicht ist vorzugsweise nicht verdichtet.

Vor dem Auftrag einer Vorbehandlungsschicht oder Durchführung erster Vorbehandlungsschritte wird die Reflektoroberfläche zweckmässig entfettet und gereinigt. Die Vorbehandlung kann auch lediglich ein Entfetten und Reinigen der Reflektoroberfläche beinhalten. Die Reinigung der Oberfläche kann auf an sich bekannte Weise, z.B. chemisch und/oder elektrochemisch und sauer oder alkalisch, erfolgen. Sie bezweckt die Entfernung von Fremdsubstanzen und gegebenenfalls der natürlich entstanden Oxidschicht auf der Aluminiumoberfläche. Als Reinigungsmittel eignen sich z.B. saure, wässrige Entfettungsmittel, alkalische Entfettungsmittel auf der Basis von Polyphosphat und Borat. Eine Reinigung mit mässigem bis starkem Materialabtrag bildet das Beizen oder Ätzen mittels stark alkalischen oder sauren Beizlösungen, wie z.B. Natronlauge oder ein Gemisch aus Salpetersäure und Flusssäure. Dabei wird die vorhandene Oxidschicht mitsamt seinen Verunreinigungen entfernt. Bei stark angreifenden alkalischen Beizen ist gegebenenfalls eine saure Nachbehandlung notwendig.
Je nach Oberflächenzustand ist auch ein mechanischer Oberflächenabtrag durch abrasive Mittel notwendig. Eine solche Oberflächenvorbehandlung kann beispielsweise durch Schleifen, Strahlen, Bürsten oder Polieren geschehen und gegebenenfalls durch eine chemische Nachbehandlung ergänzt werden.
In einer bevorzugten Ausführung wird in einem Bandverfahren eine Vorbehandlungsschicht auf ein Aluminiumband aufgebracht. Dazu wird ein Aluminiumband (Al 99,85, Ra 0,04 µm) mit 500 mm Breite und 0,3 mm Dicke kontinuierlich bei rund 40 m/min anodisiert. Dabei wurden folgende Stufen durchlaufen (durchlaufene Bäder):
a) Entfettung bei einem pH-Wert von 9 - 9,5, bei ca. 50° C und Bonder V6150/01,
b) Spülen mit Leitungswasser (Raumtemperatur),
c) Anodisieren in 20% H₂SO₄ bei ca. 25°C und 20V Spannung,
d) Spülen in Leitungswasser bei ca. 50°C und
e) Spülen in entionisiertem Wasser bei ca. 85°C.

Auf die Vorbehandlungsschicht können anschliessend die Schutzschicht oder weitere Schichten aufgebracht werden. Das Band wird vorteilhaft erst nach Abschluss der Beschichtung, d.h. nach Beschichtung mit der Schutzschicht, in Bänder von gewünschter Grösse und Form aufgeteilt.

Die reflektierende Oberfläche weist eine Rauhigkeit Ra von zweckmässig weniger als 0,1 µm, vorzugsweise von weniger als 0,05 µm und insbesondere von weniger als 0,02 µm auf. Die Oberflächenrauhigkeit Ra ist definiert in wenigstens einer der DIN-Vorschriften 4761 bis 4768.

Die Oberfläche des Reflektorkörpers kann glatt oder strukturiert sein und beispielsweise eine Licht leitende Struktur in der Ausprägung von z.B. eines Rippenmusters mit zahnförmigem Querschnitt aufweisen. Die Strukturierung kann z.B. über eine Walze mit entsprechendem Prägemuster erzeugt sein. Die Oberfläche des Reflektorkörpers kann bezüglich Strukturierung oder Rauhigkeit derart beschaffen sein, das die Reflexion der Strahlung gerichtet, gestreut oder eine Kombination davon ist.

Die vorgenannte Rauhigkeit Ra von strukturierten Oberflächen soll sich auf die einzelnen Teilflächen der Oberflächenstruktur beziehen, d.h. die Strukturierung selbst soll sinngemäss nicht in die Bestimmung der Rauhigkeit miteinbezogen sein.

In einer weiteren Ausführung kann auf den Reflektorkörper bzw. auf dessen Vorbehandlungsschicht eine die reflektierende Oberfläche ausbildende Reflexionsschicht aus einem Metall, wie z.B. eine Schicht aus Aluminium, Silber, Kupfer, Gold, Chrom, Nickel oder aus einer Legierungen, beispielsweise enthaltend überwiegend wenigstens eines der genannten Metalle, aufgetragen sein. Die Dicke der Reflexionsschicht kann beispielsweise 10 bis 200 nm (Nanometer) betragen. Ferner kann auf den Reflektorkörper bzw. auf dessen Vorbehandlungsschicht zur Einebnung der Oberflächenrauhigkeit eine funktionelle Schicht in der Ausführung einer organischen oder anorganischen Sol-Gel-Schicht aufgebracht sein. Die Reflexionsschicht kommt hier in der Regel direkt, oder über eine Haftschicht, auf die funktionelle Schicht zu liegen. Die Beschaffenheit der funktionellen Schicht ist in EP 918 236 A1 ausführlich beschrieben.

Die Reflexionsschicht kann ferner ein Teil eines Reflexionsschichtsystems sein, wobei das Reflexionsschichtsystem eine oder mehrere, auf der Reflexionsschicht aufgebrachten, transparente Schichten enthält. Beispielsweise 1, 2, 3, 4, 5, 6, 7, 8, 9 oder 10 transparente Schichten - gezählt ohne die Schutzschicht - erfüllen vorteilhaft bezüglich der optischen Dicke für jede Schicht die Formel λ/2, wobei insbesondere jede dieser transparenten Schichten eine Doppelschicht aus jeweils 2 Schichten der Dicke λ/4 ist. Die optische Dicke jeder transparenten Schicht mit der Formel λ/2 kann um ± 40 nm variieren. Bevorzugt ist eine transparente Schicht oder weiter bevorzugt sind zwei, drei oder mehrere transparente Schichten, die aus gleichen oder unterschiedlichen Materialien sein können, wobei jede der transparenten Schichten eine optische Dicke von λ/2 ± 40 nm aufweist und insbesondere eine Doppelschicht der Dicke λ/4 ist. Auf die genannte transparente Schicht oder Schichten, als oberste Schicht, resp. als die an der Oberfläche liegende Schicht, wird die Schutzschicht, die ihrerseits auch transparent ist, angeordnet. λ entspricht dem Intensitätsmaximum der Wellenlänge der reflektierten elektromagnetischen Strahlung.

Die Materialien der transparenten Schichten des Reflexionsschichtsystems bestehen aus oder enthalten z.B. Oxide, Nitride, Fluoride, Sulfide usw. von Alkalimetallen, z.B. Li, Na, K, Erdalkalimetallen, z.B. Mg, Ca, Sr, Ba, Halbmetallen, wie z.B. Si, Übergangsmetallen, z.B. Sc, Ti, V, Cr,Mn, Fe, Co, Ni, Y, Zr, Nb, Mo, Te, Ru,Rh, Pd, Hf, Ta, W, Re, Os, Ir ,Pt, Lanthanoiden, z.B. La, Ce, Pr, Nd, Pm, Dy, Yb, Lu usw. Es können namentlich genannt werden SiO_{X}, wobei x die Bedeutung von 1,1 bis 2,0 und vorzugsweise 1,8 hat, Al2O3, MgF2, TiO2, B2O3, Be-Oxid, ZnO, SnO2, Indium-Zinn-Oxid (ITO), CdS, CdTe und Hafnium- und Zirkon-Oxide. Vorteilhaft weisen wenigstens eine der transparenten Schichten, mit Ausnahme der Schutzschicht, andere Materialien auf, als die Schutzschicht selbst.

Alle oder einzelne Schichten des Reflexionsschichtsystems sowie die Reflexionsschicht können beispielsweise durch Gas- oder Dampfphasenabscheidung im Vakuum, (physical vapor deposition, PVD), durch thermische Verdampfung, durch Elektronenstrahlverdampfung, mit und ohne Ionenunterstützung, durch Sputtern, insbesondere durch Magnetronsputtering, durch Plasmapolymerisation oder durch chemische Gasphasenabscheidung (chemical vapor deposition, CVD) mit und ohne Plasmaunterstützung, auf den Reflektorkörper, resp. auf eine darauf befindliche Vorbehandlungsschicht, aufgebracht werden. Andere Auftragungsverfahren sind Lackier- oder Tauchziehverfahren von im Sol-Gel-Prozess hergestellten Lösungen mit anschliessender Trocknung, flammpyrolytische Verfahren oder Flammbeschichtung mittels SiO₂. Es können auch zwei oder mehrere Verfahren kombiniert werden. Es können z.B. PVD-Schichten durch eine Flammbeschichtung mit SiO₂ ergänzt werden. Die genannten Reflexionsschichtsysteme sind beispielsweise in EP 918 236 A1 ausführlich beschrieben.

Die Schutzschicht ist ein auf die Reflektorkörperoberfläche, die Vorbehandlungsschicht oder gegebenenfalls auf die Reflexionsschicht bzw. auf ein Reflexionsschichtsystem aufgetragener Sol-Gel-Lack, welcher nach einem Sol-Gel-Verfahren hergestellt wird.

Das Polyoxysilan wird durch eine Kondensationsreaktion zwischen hydrolisierten und vernetzbaren Silanen, insbesondere Alkoxysilanen, und kolloidaler Kieselsäure bzw. kolloidal in Wasser gelösten TiO₂ -Partikeln erzeugt. Die Kondensationsreaktion zwischen hydrolisierten Alkoxysilanen untereinander sowie hydrolysierten Alkoxysilanen und kolloidaler Kieselsäure bzw. kolloidal in Wasser gelösten TiO₂ -Partikeln führt zur Ausbildung eines anorganischen Netzwerkes von Polyoxysilanen bzw. Polyoxysilanen mit zumindest teilweisem Ersatz der SiO₂ -Partikel durch TiO₂ -Partikel. Gleichzeitig werden organische Gruppen, insbesondere Alkyl-Gruppen bzw. einfache Alkyl-Gruppen oder Methyl-Gruppen über Kohlenstoffbindungen in das anorganische Netzwerk eingebaut. Die organischen Gruppen, bzw. die Alkyl-Gruppen, nehmen jedoch nicht direkt an der Polymerisation bzw. der Vernetzung der Siloxane teil, d.h. sie dienen nicht zur Ausbildung eines organischen Polymersystems sondern lediglich zur Funktionalisierung. Die erhaltenen Polyoxysilane sind deshalb eher den anorganischen Polymeren zuzuordnen.

Das Verfahren zur Herstellung des erfindungsgemässen Reflektors ist gekennzeichnet durch die folgenden Verfahrensschritte:
a) Hydrolyse eines Gemisches aus einer Alkoxysilane enthaltenden Lösung A und einer kolloidal gelöste TiO₂ -Partikel oder kolloidal gelöste TiO₂ - und SiO₂ -Partikel enthaltenden Lösung B; oder Hydrolyse eines Gemisches aus einer Alkoxysilane enthaltenden Lösung A und einer in Wasser gelöste kolloidale Kieselsäure enthaltenden Lösung B und Beimischung von TiO₂ -Partikeln zum hydrolysierten Gemisch;
b) Auftragen des hydrolysierten Gemisches auf die freie Oberfläche des Reflektorkörpers;
c) Aushärtung und Trocknung der Sol-Gel-Lackschicht;
d) Ätzen der Sol-Gel-Lackschicht zur Freilegung der TiO₂ -Partikel an der Oberfläche der Schutzschicht.

Die Hydrolyse ist bevorzugt säurekatalysiert und die Lösung B bevorzugt eine wässrige Lösung, z.B. auch eine wässrige alkoholische Lösung.

Die Lösung A enthält zweckmässig ein mit dieser mischbares Lösungsmittel, insbesondere ein polares Lösungsmittel, wie Alkohol oder Ethylacetat. Zur Erhöhung des Flammpunktes des herzustellenden Lacksystems kann ein alkoholisches Lösungsmittel mit einem vergleichsweise hohen Siedepunkt, wie z. B. ein Glykol oder eine Glykolverbindung, wie Ethylenglykol oder Buthoxyethanol, verwendet werden.

Die Lösung B ist eine wässrige kolloidale Kieselsäure- bzw. TiO₂-Lösung mit einem pH-Wert < 7. Die Lösung B ist zweckmässig mittels Salpetersäure (HNO3) auf einen pH-Wert zwischen 2,0 - 3,0, vorzugsweise zwischen 2,3 - 2,7, und insbesondere von 2,5 eingestellt.

Die Lösung A ist bevorzugt eine alkoholische Lösung aus Tetraethoxysilan (TEOS) und einem zweiten Alkoxysilan der Formel XSi(OC₂H₅)₄₋ₙ, insbesondere Methyltriethoxysilan (MTEOS). Die Lösung A kann noch weitere Alkoxysilane enthalten, enthält jedoch bevorzugt ausschliesslich die beiden eingangs genannten Alkoxysilane TEOS und MTEOS. Enthält die Lösung A weitere Alkoxysilane, so sind deren Alkoxy-Gruppen bevorzugt nicht aus Methoxy. Bei der Verwendung von Alkoxysilane mit Methoxy-Gruppen, wie z. B. Methyltrimethoxysilan (MTMOS), werden bei der Hydrolyse Methanole freigesetzt, welche gesundheitsschädliche Dämpfe erzeugen, die in der Lösungsmittelverarbeitenden Industrie unerwünscht, bzw. durch gesetzliche Vorschriften nicht mehr zulässig sind. Ferner weisen Methanole einen verhältnismässig tiefen Flammpunkt auf. Alkoxysilane mit Ethoxy-Gruppen setzen hingegen bei der Hydrolyse keine gesundheitsgefährdenden Alkohole frei und sind daher unbedenklich.

Die Alkoxysilane der Lösung A liegen in einem wasserfreien Medium in nicht hydrolisierter Form vor. Als Lösungsmittel wird bevorzugt ein Alkohol mit vergleichsweise hohem Siedepunkt, wie z. B. ein Glykol oder eine Glykolverbindung, verwendet. Dies kann z. B. Ethylenglykol oder 2-Buthoxyethanol sein. Obwohl durch die Hydrolyse weitere Alkohole freigesetzt werden, welche einen massgeblichen Einfluss auf den Flammpunkt haben, kann durch die Wahl eines geeigneten Lösungsmittel, wie oben beschrieben, der Flammpunkt der Gesamtlösung um ein paar Grade soweit nach oben verschoben werden, dass dieser über dem Grenzwert von 21 °C gemäss nach ISO 13736 bzw. ASTM D6450 zu liegen kommt.

Der Sol-Gel-Lack wird zweckmässig in Gel-Form auf den Reflektorkörper, bzw. auf die entsprechende Oberfläche, aufgetragen bzw. abgeschieden und anschliessend einem Härtungs- und Trocknungsprozess unterzogen. Beim Härtungsprozess setzt eine Kondensationsreaktion ein, bei der unter Wasser-Abspaltung aus jeweils zwei Si-OH-Gruppen eine Siloxan-Bindung (Si-O-Si) aufgebaut wird. Durch fortschreitende Polymerisation entsteht dabei ein Netzwerk von Polyoxysilanen, an welche Alkoxy-Gruppen angegliedert sind. Der Trocknungsprozess besteht darin, die im Sol-Gel-Lack verbleibenden Wasser und Alkohole auszutreiben, wodurch der Sol-Gel-Lack aushärtet und eine witterungsbeständige und korrosionsfeste Schutzschicht auf der Reflektoroberfläche bzw. der Reflexionsschicht entsteht.

Die Beschichtung erfolgt zweckmässig in einem kontinuierlichen Verfahren, durch beispielsweise Aufpinseln, Aufwalzen, Schleudern, Spritzen Tauchen bzw. Tauchziehbeschichten. Besonders bevorzugte kontinuierliche Beschichtungsverfahren sind das Banddurchlaufverfahren oder Bandlackierungsverfahren, auch Coil-Coating-Verfahren genannt.

Der mit dem Sol-Gel-Lack beschichtete Reflektor wird zweckmässig mittels Strahlung, wie UV-Strahlung, Elektronenstrahlung, Laserstrahlung, oder mittels Wärmestrahlung, wie IR-Strahlung, oder mittels Konvektionserwärmung oder einer Kombination der vorgenannten Trocknungs- bzw. Härtungsverfahren, getrocknet resp. gehärtet.

Die erhöhte Temperatur, gemessen am Reflektorkörper, zur Trocknung bzw. Härtung des Sol-Gel-Lackes ist zweckmässig grösser als 60°C, vorzugsweise grösser als 150°C. Die erhöhte Temperatur ist ferner zweckmässig kleiner als 400°C, vorzugsweise kleiner als 350°C. Die erhöhte Temperatur liegt besonders bevorzugt zwischen 200°C und 320°C. Bei der Temperaturangabe handelt es sich um eine sogenannte "Peak Metal Temperature" (PMT).

Die erhöhte Temperatur kann beispielsweise während 5 Sekunden bis 2 Minuten auf den Körper einwirken. Der Sol-Gel-Lack wird während einer Zeit von vorzugsweise weniger als 90 Sekunden, insbesondere von weniger als 60 Sekunden, und von vorzugsweise mehr als 10 Sekunden, insbesondere von mehr als 30 Sekunden getrocknet bzw. gehärtet. Bei Einsatz von IR-Strahlung liegen die Trocknungszeiten eher im unteren Bereich der angegebenen Aufenthaltszeiten.

Die Konvektionserwärmung kann zweckmässig durch eine Beaufschlagung mit erwärmten Gasen, wie Luft, Stickstoff, Edelgase oder Gemischen daraus, erfolgen. Die Sol-Gel-Lackschicht wird bevorzugt in einem Durchlaufofen getrocknet.

Die Reflektoren, beispielsweise in Form von Folien, Bändern oder Blechen, lassen sich nach dem Auftrag und Trocknung der Schutzschicht auch umformen. Die Reflektoren können z.B. zu Parabolrinnen weiterverarbeitet werden. Die Umformung führt dabei kaum zu Rissbildung in der Schutzschicht.

Die Reflektoren gemäss Erfindung weisen eine gute Schutzwirkung gegen Witterungseinflüsse, Korrosion, mechanischen Abbau oder Abrieb bzw. weisen eine hohe Kratzfestigkeit auf. Kreidung tritt praktisch keine auf. Wird bei der Herstellung der Siloxane kolloidale Kieselsäure verwendet, so lassen sich grössere Schichtdicken im Mikrometerbereich herstellen, bei welchen während des Trocknungs- und Härtungsprozesses keine Rissbildung, z.B. aufgrund Volumenkontraktion, entsteht.

Ferner erlauben die erfindungsgemässen Reflektoren den Einsatz von Aluminiumlegierungen, ohne dass diese zwecks Erreichen hoher Glanz- und Gesamtreflexionswerte z.B. mit Rein- oder Reinstaluminium plattiert bzw. beschichtet werden müssen. Im Gegensatz zu den Reflektoren aus Rein- oder Reinstaluminium, weisen Letztere jedoch wesentlich höhere Festigkeiten auf, was für verschiedenste Anwendungen unabdingbar ist.

Der Reflektor weist eine Gesamtreflexion nach DIN 5036 3. Teil, insbesondere eine Gesamtreflexion im sichtbaren und infraroten Wellenlängenbereich, von grösser als 75%, vorzugsweise von grösser als 80%, und insbesondere von grösser als 83%, auf.

Enthält der Reflektor ein zusätzliches reflexionserhöhendes Schichtsystem, beträgt die genannte Gesamtreflexion über 75%, vorzugsweise über 85%, und insbesondere über 90%.

Wird die Aluminiumoberfläche des Reflektorkörpers vorgängig geglänzt, so weist der Reflektor in der Regel Glanzwerte im sichtbaren Wellenlängenbereich nach DIN 67530 von über 73% auf. Wird die Aluminiumoberfläche des Reflektorkörpers nicht vorgängig geglänzt, so weist der Reflektor in der Regel Glanzwerte im sichtbaren Wellenlängenbereich nach DIN 67530 von über 63% auf.

Die genannte Gesamtreflexion und der Glanz des erfindungsgemässen Reflektors nimmt beispielsweise nach 3000h (Stunden) QUV-Test und insbesondere nach 2000h QUV-Test um weniger als 5%, und insbesondere um weniger als 2% ab.

Der QUV-Test ist ein künstlicher Bewitterungstest zur Beurteilung der Witterungsbeständigkeit von Bauteilen und ihren Oberflächen im Freien. Der QUV-Test wurde 1969 durch das Unternehmen "Q-Panel" eingeführt und ist heute eine international standardisierte Testmethode. Der in vorliegenden Versuchen angewendete QUV-Test wurde gemäss den Vorgaben nach "Standard Practice for Operating Light- and Water-Exposure Apparatus (Fluorescent UV-Condensation Type) for Exposure of Nonmetallic Materials" der American Society for Testing and Materials", bzw. nach ASTM G 53-96, ausgeführt.

Der erfindungsgemässe Reflektor weist ferner im 1000h "Filiformkorrosionstest" nach DIN EN ISO 3665, keine Korrosionserscheinungen auf. Überdies beträgt die Abnahme der Gesamtreflexion und des Glanzes im 1000h "Essigsaure Salzsprühtest" nach DIN 50021 ESS weniger als 5%, insbesondere weniger als 2%.

Des weiteren verfügen die erfindungsgemässen Reflektoren dank der Sol-Gel-Schutzschicht aus Polyoxysilanen über eine hohe Oberflächenhärte. Die Sol-Gel-Schutzschicht weist zweckmässig eine Härte gemessen nach der Methode "Bleistiftverfahren nach Wolf Wilburn" nach DIN 55350 Teil 18 von grösser "F", vorzugsweise von grösser "H", insbesondere von grösser "2H" und vorteilhaft von grösser "3H" auf, wobei grösser im Sinne von härter zu verstehen ist.

Die Sol-Gel-Schicht zeichnet sich zudem durch eine ausgezeichnete Haftung auf dem Reflektorkörper bzw. auf den darüber liegenden Schichten aus.
Der erfindungsgemässe Reflektor ist herstellbar dadurch, die reflektierende Oberfläche aus Aluminium oder einer Aluminiumlegierung eine Rauhigkeit Ra von kleiner als 0,1 µm nach DIN 4761 bis 4768 aufweist und der Reflektor eine aussen liegende, abschliessende transparente Schutzschicht aus einem Polymer einer Dicke von grösser als 1 µm enthält und die Schutzschicht in einem kontinuierlichen Coil-Coating-Verfahren auf die reflektierende Oberfläche, die Vorbehandlungsschicht oder das Reflexionsschichtsystem aufgetragen wird und die Schutzschicht des Reflektors in einem Durchlaufofen getrocknet und gehärtet wird.

Die Bandbeschichtungsgeschwindigkeit in einem Banddurchlaufverfahren beträgt beispielsweise rund 30m/min.

Der Reflektorkörper wird vorzugsweise in einem Durchlaufofen unter Einwirkung von Wärmestrahlung und/oder Konvektionswärme, vorzugsweise unter Beaufschlagung mit erwärmten Gasen getrocknet.

Die Beschichtung erfolgt zweckmässig bei Raumtemperatur, z.B. bei 10 - 30 °C, insbesondere bei 15 - 25 °C.

Vorliegende Erfindung umfasst auch die Verwendung erfindungsgemässer Reflektoren als Reflektoren für Sonnen- oder Kunstlicht und Infrarotstrahlung und als Lichtleitelemente für Sonnen- oder Kunstlicht.

Die erfindungsgemässen Reflektoren sind beispielsweise geeignet als Reflektoren oder Lichtleitelemente in der Licht- und Leuchtentechnik, wie Reflektoren in Bildschirmarbeitsplatz-Leuchten, Primärleuchten, Sekundärleuchten, Rasterleuchten, Lichtdecken oder als Lichtumlenklamellen.

Ferner können die erfindungsgemässen Reflektoren in der Solartechnik als Solar-Reflektoren, z.B. in der thermischen Solartechnik, als Solar Booster im Bereich der Photovoltaik, in Solar-Kraftwerken, als lichtkonzentrierende Sonnenkollektoren, in Solar-Kochern oder Solar-Öfen, eingesetzt werden. Die erfindungsgemässen Reflektoren können auch als leichte, unzerbrechliche und gegebenenfalls beheizbare Spiegel für Fahrzeuge oder als Scheinwerferreflektoren eingesetzt werden. Die besagten Reflektoren können auch als Fassadenelemente mit reflektierenden Eigenschaften bzw. mit Glanzeigenschaften eingesetzt werden. Die beispielsweise hoch- oder matt-glänzenden Aluminiumoberflächen sind dabei dank der erfindungsgemässen Schutzschicht korrosionsfest versiegelt.

Die IR-Strahlung, das sichtbare Licht und die UV-Strahlung decken dabei den Wellenlängenbereich von 10⁻⁸ m bis 10⁻³ m ab.

Nachfolgend wird anhand eines Beispiels die Zubereitung und Herstellung einer besonders bevorzugten Ausführung eines Sol-Gel-Lackes beschrieben. Dazu werden eine Lösung A und eine Lösung B vorbereitet, wobei die Lösung B gemäss einer 1. und 2 Alternative hergestellt werden können:

### Lösung A:

200 g Isopropylalkohol
150 g Tetraethoxysilan (TEOS)
458 g Methyltrimethoxysilan (MTEOS)

### Lösung B:

15 %-ige wässrige kolloidale TiO₂ -Lösung

Der pH-Wert der Lösung B ist unter Zugabe einer Säure, insbesondere Salpetersäure (HNO3), auf ca. 2,5 eingestellt.

Die Herstellung des Sol-Gel-Lackes und die Beschichtung des Reflektorkörpers erfolgt in bevorzugter Ausführung wie folgt:

Einer Basislösung A, wie zuvor beschrieben, wird unter Rühren eine Lösung B in den oben genannten Anteilen zugegeben. Die Lösungen A und B werden unter kontinuierlichem Rühren in eine Mischlösung überführt, wobei reaktionsbedingt Wärme freigesetzt wird.
Die Mischlösung wird über eine bestimmte Zeit, beispielsweise während 1 h bis 10 h, vorzugsweise währen 4 bis 8 h, insbesondere während rund 6 h gerührt und kühlt dabei ab. Danach wird die Mischlösung filtriert.

Nach Abschluss des Rührvorganges kann der Sol-Gel-Lack mittels eines der vorgenannten Verfahrens auf den Reflektorkörper oder die darüber liegenden Schichten aufgetragen und nachfolgend, wie vorgängig beschrieben, getrocknet bzw. gehärtet und anschliessend mit einer wässrigen alkalischen Lösung, z. B. bestehend aus 2g/L Na₃PO₄ ·12 H₂O, 0.3 g/L NaCl und 12.7 g/L NaOH, geätzt werden.

Der Sol-Gel-Lack wird nach seiner Herstellung und vor dem Auftrag auf den Reflektorkörper bevorzugt während weniger Minuten bis mehreren Stunden, vorzugsweise zwischen 1 und 24 h (Stunden), insbesondere zwischen 12 und 22 h und besonders bevorzugt während rund 17 h ruhig gestellt.

Der Aufbau eines erfindungsgemässen Reflektors wird nachfolgend anhand der Zeichnung näher erläutert. Diese zeigt schematisch in
- Fig. 1: einen Querschnitt durch einen erfindungsgemässen Reflektor;
- Fig. 2: einen Querschnitt durch eine Variante des Reflektors von Fig. 1;
- Fig. 3: ein Netzwerk aus Polyoxysilanen;
- Fig. 4: einen Querschnitt durch einen erfindungsgemässen Reflektor mit selbstreinigender Schutzschicht vor dem Ätzen;
- Fig. 5: einen Querschnitt durch einen erfindungsgemässen Reflektor mit selbstreinigender Schutzschicht nach dem Ätzen.

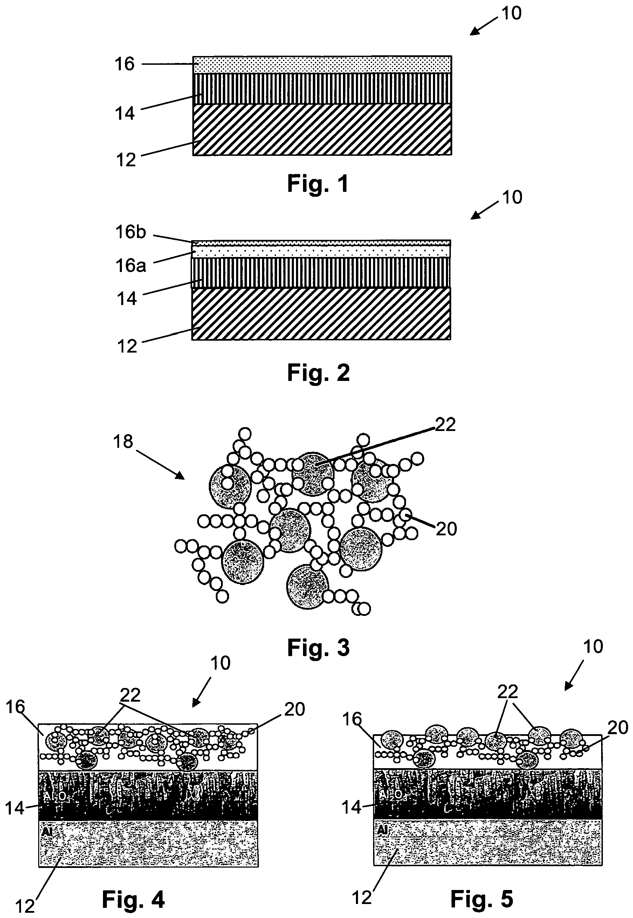

Ein in Fig. 1 dargestellter Reflektor 10 besteht aus einem Reflektorkörper 12, beispielsweise ein Walzprodukt aus Aluminium mit einem Reinheitsgrad >99,8%. Die Oberfläche des Reflektorkörpers 12 ist entfettet und mit einer Vorbehandlungsschicht 14 in Form einer anodisch erzeugten Oxidschicht mit einer Dicke von z. B. 300 - 500 nm versehen. Auf die Vorbehandlungsschicht 14 ist eine Schutzschicht 16 in Form einer Sol-Gel-Lackschicht von 3 µm Dicke aus Polyoxysilanen aufgebracht, wobei wenigstens ein Teil der SiO₂ -Partikel gegen TiO₂ -Partikel ausgetauscht ist.

Ein in Fig. 2 dargestellter Reflektor 10 unterscheidet sich von dem in Fig. 1 gezeigten Reflektor 10 einzig durch eine aus zwei Teilschichten 16a, 16b aufgebaute Schutzschicht 16. Die erste Teilschicht 16a besteht aus einem Sol-Gel-Lack mit SiO₂ -Partikeln als Korrosionsschutzschicht. Auf der ersten Teilschicht 16a ist eine zweite Teilschicht 16b aus einem Sol-Gel-Lack mit TiO₂ -Partikeln als Selbstreinigungsschicht angeordnet.

Fig. 3 zeigt den Aufbau eines Polyoxysilan-Netzwerkes 18 mit einem Silan-Netzwerk 20, wobei die SiO₂ -Partikel zumindest teilweise durch TiO₂ -Partikel 22 ersetzt sind.

Fig. 4 zeigt einen Reflektor 10 entsprechend Fig. 1 mit einer Schutzschicht 16 aus einem Sol-Gel-Lack aus einem in Fig. 3 dargestellten Silan-Netzwerk 20 mit TiO₂ -Partikeln 22.

Fig. 5 zeigt den Reflektor 10 von Fig. 4 nach dem Ätzen der Oberfläche der Schutzschicht 16. Nach dem Ätzen ist die Oberfläche mit freien TiO₂ -Partikeln 22 belegt.

## Patentansprüche

1. Verfahren zur Herstellung eines witterungs- und korrosionsbeständigen Reflektors (10)für elektromagnetische Strahlung, insbesondere für Infrarot-Strahlung, sichtbares Licht und Ultra-violett- Strahlung, mit hoher Gesamtreflexion, enthaltend einen Reflektorkörper (12) aus Aluminium oder einer Aluminiumlegierung mit einer reflektierenden Oberfläche wobei die Oberfläche des Reflektorkörpers vorbehandelt ist aus anodisch oxidiertem Aluminium, das direkt aus dem an der Oberfläche des Reflektorkörpers liegenden Aluminium erzeugt wird und eine Vorbehandlungsschicht aufweist wobei der Reflektor (10) eine aussen liegende, abschliessende, transparente Schutzschicht (16) aus einem ein Netzwerk (18) aus Polyoxysilanen aufweisenden Sol-Gel-Lack enthält, auf der Vorbehandlungsschicht hergestellt wird beinhaltend die folgenden Verfahrensschritte:
a) Hydrolyse eines Gemisches aus einer Alkoxysilane enthaltenden Lösung A und einer kolloidal gelöste Ti02 -Partikel oder kolloidal gelöste Ti02 - und Si02 -Partikel enthaltenden Lösung B; oder Hydrolyse eines Gemisches aus einer Alkoxysilane enthaltenden Lösung A und einer kolloidale Kieselsaure enthaltenden Lösung B und Beimischung von Ti02 -Partikeln zum hydrolysierten Gemisch;
b) Auftragen des hydrolysierten Gemisches auf die freie Oberfläche des Reflektorkörpers (12);
c) Aushärtung und Trocknung der Sol-Gel-Lackschicht;
d) Ätzen der Sol-Gel-Lackschicht zur Freilegung der Ti02 -Partikel an der Oberfläche der Schutzschicht (16). so dass
a) die Oberfläche der Schutzschicht zur Erzeugung eines Selbstreinigungseffekts zumindest teilweise mit freien TiO2 -Partikeln belegt ist,
b) die Ti02 Partikel in der Anatas-Modifikation vorliegen und der Schutzschichtoberfläche hydrophile Eigenschaften verleihen.

2. Verfahren nach Anspruch 1, in dem die Hydrolyse säurekatalysiert ist und die Lösung B eine wässrige Lösung ist.

3. Verfahren nach Anspruch 1 oder 2, in dem die Lösung A eine Lösung mit einem ersten und zweiten Alkoxysilan und einem mit der Lösung A mischbaren Lösungsmittel ist, und das erste Alkoxysilan ein Tetraethoxysilan (TEOS) und das zweite Alkoxysilan durch die Formel XnSi(OC2H5)₄₋ₙ beschrieben wird, wobei X einen organischen Rest beschreibt und n eine Zahl von 0 bis 3 ist.

4. Verfahren nach Anspruch 3, in dem das zweite Alkoxysilan ein Methyltriethoxysilan (MTEOS) ist.

5. Verfahren nach einem der Ansprüche 1 bis 4, in dem die Lösung B eine saure, wässrige Lösung mit einem pH-Wert < 7 ist.

6. Verfahren nach einem der Ansprüche 1 bis 5, in dem das Lösungsmittel der Lösung A ein polares Lösungsmittel, wie Alkohol oder Ethylacetat, ist, insbesondere, dass das alkoholische Lösungsmittel ein Glykol oder eine Glykolverbindung enthält oder daraus besteht, und insbesondere ein Ethylenglykol oder Buthoxyethanol ist.

7. Verfahren nach einem der Ansprüche 1 bis 6, in dem die Schutzschicht (16) eine erste Teilschicht (16a) aus einem Sol-Gel-Lack mit Si02-Partikeln als Korrosionsschutzschicht und eine auf der ersten Teilschicht (16a) angeordnete zweite Teilschicht (16b) aus einem Sol-Gel-Lack mit Ti02-Partikeln als Selbstreinigungsschicht umfasst.

8. Verfahren nach einem der Ansprüche 1 bis 7, in dem die Schutzschicht (16) eine im gehärtetem Zustand eine Dicke von wenigstens 1 µm, vorzugsweise wenigstens 2 µm, und von höchstens 20 µm, oder höchstens 10 µm, oder höchstens 5 µm, aufweist.

9. Verfahren nach einem der Ansprüche 1 bis 8, **dadurch gekennzeichnet, dass** der Reflektor (10) einen Reflektorkörper (12) aus Aluminium und/oder eine Beschichtung aus Aluminium enthalt und der Aluminiumwerkstoff des Reflektorkörpers (12) und/oder der Beschichtung einen Reinheitsgrad von grösser als 99,5%, oder grösser als 99,7% oder grösser als 99,8% aufweist.

10. Verfahren nach einem der Ansprüche 1 bis 9, in dem die Vorbehandlungsschicht (14) eine in einem rücklösenden oder nicht rücklösenden Elektrolyten anodisch erzeugte Oxidschicht, oder eine in einem rücklösenden Elektrolyten anodisch erzeugte poröse Oxidschicht, oder eine unverdichtete, poröse Oxidschicht, ist und die Schutzschicht (16) unmittelbar auf die Oxidschicht aufgetragen ist.

11. Verfahren nach einem der Ansprüche 1 bis 10, in dem die Vorbehandlungsschicht (14) eine Dicke von wenigstens 10 nm, oder von wenigstens 20 nm oder von wenigstens 50 nm oder von wenigsten 100 nm und eine Dicke von maximal 5000 nm, oder von maximal 500 nm aufweist.

## Claims

1. Method for producing a weather and corrosion resistant reflector (10) for electromagnetic radiation, in particular for infrared radiation, visible light and ultraviolet radiation, having a high overall reflectivity, comprising a reflector body (12) made from aluminium or an aluminium alloy with a reflective surface, wherein the surface of the reflector body is pretreated with anodised aluminium that is produced directly from the aluminium present on the surface of the reflector body and has a pretreatment layer, wherein the reflector (10) includes an external, terminating, transparent protective layer (16) from a sol-gel varnish having a network (18) of polyoxysilanes, on which the pretreatment layer is produced,
including the following method steps:
a) hydrolysing a mixture of a solution A containing alkoxysilanes and a solution B containing colloidally dissolved Ti02 particles or colloidally dissolved Ti02 and Si02 particles; or hydrolysing a mixture of a solution A containing alkoxysilanes and a solution B containing colloidal silica, and admixing Ti02 particles to the hydrolysed mixture;
b) applying the hydrolysed mixture onto the free surface of the reflector body (12);
c) curing and drying the sol-gel varnish layer;
d) etching the sol-gel varnish layer in order to expose the Ti02 particles on the surface of the protective layer (16),
so that
a) the surface of the protective layer is at least partially covered with free Ti02 particles for generating a self-cleaning effect,
b) the Ti02 particles are present in the anatase modification and confer hydrophilic properties to the surface of the protective layer.

2. Method according to claim 1, in which the hydrolysis is acid-catalysed and solution B is an aqueous solution.

3. Method according to claim 1 or 2, wherein solution A is a solution containing a solvent that can be mixed with a first and a second alkoxysilane and with solution A, and the first alkoxysilane is a tetraethoxysilane (TEOS) and the second alkoxysilane is described by the formula XnSi(OC2H5)₄₋ₙ, wherein X describes an organic residue and n is a number from 0 to 3.

4. Method according to claim 3, wherein the second alkoxysilane is a methyl triethoxysilane (MTEOS).

5. Method according to any one of claims 1 to 4, wherein solution B is an acidic, aqueous solution with a pH value < 7.

6. Method according to any one of claims 1 to 5, wherein the solvent of solution A is a polar solvent such as alcohol or ethylacetate, in particular wherein the alcoholic solvent contains or consists of a glycol or a glycol compound and is in particular an ethylene glycol or butoxyethanol.

7. Method according to any one of claims 1 to 6, wherein the protective layer (16) comprises a first sublayer (16a) from a sol-gel varnish with Si02 particles as a corrosion protection layer and a second sublayer (16b), which is placed on the first sublayer (16a), from a sol-gel varnish with Ti02 particles as a self-cleaning layer.

8. Method according to any one of claims 1 to 7, wherein the protective layer (16) has, in the cured condition, a thickness of at least 1 µm, preferably at least 2 µm, no more than 20 µm or no more than 10 µm or no more than 5 µm.

9. Method according to any one of claims 1 to 8, **characterised in that** the reflector (10) includes a reflector body (12) from aluminium and/or a coating from aluminium and the aluminium material of the reflector body (12) and/or of the coating has a degree of purity of more than 99.5% or more than 99.7% or more than 99.8%.

10. Method according to any one of claims 1 to 9, wherein the pretreatment layer (14) has an oxide layer anodically generated in a dissolving or non-dissolving electrolyte or a porous oxide layer anodically generated in a dissolving electrolyte, or an uncondensed, porous oxide layer and the protective layer (16) is applied directly onto the oxide layer.

11. Method according to any one of claims 1 to 10, wherein the pretreatment layer (14) has a thickness of at least 10 nm or of at least 20 nm or of at least 50 nm or of at least 100 nm and a thickness of no more than 5000 nm, or of no more than 500 nm.

## Revendications

1. Procédé de fabrication d'un réflecteur (10) résistant aux intempéries et à la corrosion pour le rayonnement électromagnétique, en particulier pour le rayonnement infrarouge, la lumière visible et le rayonnement ultraviolet, présentant une réflexion totale élevée, comportant un corps de réflecteur (12) en aluminium ou alliage d'aluminium avec une surface réfléchissante, ladite surface du corps de réflecteur ayant subi un prétraitement à base d'aluminium oxydé par anodisation obtenu directement à partir de l'aluminium situé à la surface du corps de réflecteur et présentant une couche de prétraitement, le réflecteur (10) comportant une couche de protection (16) extérieure finale transparente constituée d'un vernis sol-gel présentant un réseau (18) composé de polyoxysilanes, sur laquelle la couche de prétraitement est réalisée, comprenant les étapes de procédé suivantes :
a) hydrolyse d'un mélange d'une solution A contenant des alcoxysilanes et d'une solution B contenant des particules de TiO₂dissoutes à l'état colloïdal ou des particules de TiO₂ et SiO₂ dissoutes à l'état colloïdal ; ou hydrolyse d'un mélange d'une solution A contenant des alcoxysilanes et d'une solution B contenant de l'acide silicique colloïdal et ajout de particules de TiO₂ au mélange hydrolysé ;
b) application du mélange hydrolysé sur la surface libre du corps de réflecteur (12) ;
c) durcissement et séchage de la couche de vernis sol-gel ;
d) décapage de la couche de vernis sol-gel afin de mettre à nu les particules de TiO₂ à la surface de la couche de protection (16),
de sorte que
a) la surface de la couche de protection est garnie au moins partiellement de particules libres de TiO₂ pour produire un effet d'autonettoyage,
b) les particules de TiO₂ sont présentes sous leur forme anatase et confèrent à la surface de la couche de protection des propriétés hydrophiles.

2. Procédé selon la revendication 1, dans lequel l'hydrolyse est catalysée par un acide et la solution B est une solution aqueuse.

3. Procédé selon la revendication 1 ou 2, dans lequel la solution A est une solution contenant un premier et deuxième alcoxysilanes et un solvant pouvant être mélangé avec la solution A, et le premier alcoxysilane est un tétraéthoxysilane (TEOS) et le deuxième alcoxysilane est représenté par la formule XnSi(OC2H5)₄₋ₙ, X étant un reste organique et n un nombre de 0 à 3.

4. Procédé selon la revendication 3, dans lequel le deuxième alcoxysilane est un méthyltriéthoxysilane (MTEOS).

5. Procédé selon l'une des revendications 1 à 4, dans lequel la solution B est une solution aqueuse acide ayant un pH < 7.

6. Procédé selon l'une des revendications 1 à 4, dans lequel le solvant de la solution A est un solvant polaire tel que l'alcool ou l'acétate d'éthyle, plus particulièrement le solvant alcoolique contient un glycol ou un composé glycol ou en est constitué, et est en particulier un éthylèneglycol ou un buthoxyéthanol.

7. Procédé selon l'une des revendications 1 à 6, dans lequel la couche de protection (16) comprend une première couche partielle (16a) constituée d'un vernis sol-gel avec des particules de SiO₂ comme couche de protection contre la corrosion et, disposée sur la première couche partielle (16a), une deuxième couche partielle (16b) constituée d'un vernis sol-gel avec des particules de TiO₂ comme couche autonettoyante.

8. Procédé selon l'une des revendications 1 à 7, dans lequel la couche de protection (16) présente à l'état durci une épaisseur d'au moins 1 µm, de préférence d'au moins 2 µm, et ne dépassant pas 20 µm, ou ne dépassant pas 10 µm, ou ne dépassant pas 5 µm.

9. Procédé selon l'une des revendications 1 à 8, **caractérisé en ce que** le réflecteur (10) comporte un corps de réflecteur (12) en aluminium et/ou un revêtement en aluminium, et le matériau d'aluminium du corps de réflecteur (12) et/ou du revêtement présente un degré de pureté supérieur à 99,5%, ou supérieur à 99,7%, ou supérieur à 99,8%.

10. Procédé selon l'une des revendications 1 à 9, dans lequel la couche de prétraitement (14) est une couche d'oxyde obtenue par anodisation dans un électrolyte provoquant ou ne provoquant pas la redissolution, ou une couche d'oxyde poreuse obtenue par anodisation dans un électrolyte provoquant la redissolution, ou une couche d'oxyde poreuse non comprimée, et la couche de protection (16) est appliquée directement sur la couche d'oxyde.

11. Procédé selon l'une des revendications 1 à 10, dans lequel la couche de prétraitement (14) présente une épaisseur d'au moins 10 nm, ou d'au moins 20 nm, ou d'au moins 50 nm, ou d'au moins 100 nm et une épaisseur ne dépassant pas 5000 nm, ou ne dépassant pas 500 nm.
